# EUROPEAN PATENT SPECIFICATION

(11) **EP 3 412 154 B1**
(45) Date of publication and mention of the grant of the patent: **05.06.2024**
(21) Application number: 17747590.2
(22) Date of filing: 03.02.2017
(51) Int. Cl.: A21D 2/08, A21D 2/16, A21D 10/00, A23P 10/40, A23L 7/10, A23L 27/00, A23L 27/10, B65D 1/02, B65D 83/06

(54) **PACKED WHEAT FLOUR FLAVORING**
VERPACKTES WEIZENMEHLAROMA
AROMATISANT DE FARINE EMBALLÉ

(30) Priority: 03.02.2016 JP 2016019061
(43) Date of publication of application: 12.12.2018
(73) Proprietor: Nisshin Seifun Welna Inc., Tokyo 101-8441 (JP)
(72) Inventor: OMURA, Masato, Tokyo 103-8544 (JP); SAKAKIBARA, Michihiro, Tokyo 103-8544 (JP)
(74) Representative: Blodig, Wolfgang
(86) International application number: PCT/JP2017/004069
(87) International publication number: WO 2017/135439

(56) References cited:
- WO-A1-2015/118697
- WO-A1-2015/118697
- WO-A1-2015/119294
- WO-A1-2015/119294
- JP-A- 2004 123 594
- JP-A- 2004 123 594
- JP-A- 2007 063 217
- JP-A- 2007 063 217
- JP-A- 2012 036 140
- JP-A- 2012 036 140
- JP-B1- 6 022 114

## Description

### Technical Field

The present invention relates to packed wheat flour flavoring comprising a container and wheat flour flavoring packed in the container, wherein the flavoring can be shaken out from a container to be used. The invention also relates to a method for applying wheat flour flavoring.

### Background Art

A powder mixture (hereinafter also referred to as wheat flour flavoring, in some cases) containing powdered flavoring such as salt, sugar, powdered spice, or powder extract and wheat flour is generally commercially available as a premixed product such as a *karaage* (deep-fried food) powder mix or a meuniere mix. However, conventionally, wheat flour has low flowability and easily causes lumps. In addition, powdered flavoring contains a component having high aggregability or hygroscopicity and therefore easily causes consolidation or aggregation. Therefore, conventional wheat flour flavoring generally has poor operability at the time of being weighed, packaged, and used disadvantageously because of low flowability and easily causing lumps and consolidation. Furthermore, when wheat flour flavoring is vibrated during transportation or storage, a wheat flour component and a flavoring component as contents may be separated from each other to cause an uneven state. In a case where such uneven wheat flour flavoring is used for cooking, the taste and quality of the resulting cooked food may be impaired.

Wheat flour flavoring such as a *karaage* (deep-fried food) powder mix is generally packaged in a bag and taken out in a necessary amount when being used. However, it is a complicated work to open the bag every use time, take out the mixed powder in a necessary amount, and seal the bag again by some means during cooking. Furthermore, it may often occur that the necessary amount of mixed powder cannot be taken out well. For example, many take-out operations are necessary because of an insufficient amount of powder to be taken out, or conversely an extremely large amount of powder is taken out to waste the powder.

Patent Literatures 1 to 4 disclose packing wheat flour into a shaker-type container. However, these disclosures are basically aimed at improving operability of wheat flour during cooking. Patent Literatures 5 and 6 disclose use of flavoring prevented from consolidation by adjusting the composition thereof in a container. Patent Literature 7 discloses that granular flavoring obtained by granulating powdered flavoring with oil and fat and having an angle of repose ranging from 37 to 39 degree has excellent fluidity, however does not disclose improvement of properties of flavoring mixed with wheat flour.

### Citation List

### Patent Literature

Patent Literature 1: JP H9-266862 A
Patent Literature 2: JP H4-48179 U
Patent Literature 3: WO 2015/119294 A
Patent Literature 4: WO 2015/119295 A
Patent Literature 5: JP 2005-270058 A
Patent Literature 6: JP H5-84048 A
Patent Literature 7: JP S58-116652 A

### Summary of Invention

### Technical Problem

As a result of studies by the present inventors, the following has been found. That is, even if conventional wheat flour and powdered flavoring are mixed and packed in a shaker-type container, it is difficult to shake out an appropriate amount of wheat flour flavoring. Furthermore, due to vibration caused by a shaking operation, a wheat flour component and a flavoring component are separated from each other in the container and finally become unsuitable for use as a mix. Wheat flour flavoring obtained by mixing wheat flour and powdered flavoring includes a plurality of types of powders having different properties. Therefore, it is important for packed wheat flour flavoring that each of the powders having different properties is shaken out from a container at a constant ratio all the time.

The present inventors made intensive studies in order to provide wheat flour flavoring that can be shaken out of a shaker-type container in a small amount, that makes it difficult to separate a wheat flour component and a flavoring component from each other in the container, and that can be shaken out from the container while a blending ratio between both components is kept at a constant ratio all the time.

### Solution to Problem

As a result, the present inventors have found that by packing wheat flour flavoring having a specific angle of repose in a shaker-type container having a shaker hole(s) of a specific size, a wheat flour component and a powdered flavoring component are not separated from each other, and that a small amount and a certain amount of wheat flour flavoring can be shaken out.

That is, the present invention provides the following.

Packed wheat flour flavoring comprising a container and wheat flour flavoring packed in the container, wherein
the wheat flour flavoring is a powder mixture comprising wheat flour and powdered flavoring, the wheat flour flavoring has an angle of repose of 33 to 54 degrees, and the container is a shaker-type container having one or more shaker holes with a maximum width of 2 to 20 mm,
wherein the wheat flour flavoring further comprises 0.02 to 3% by mass of one or more fluidizers selected from the group consisting of a sucrose fatty acid ester and silicon dioxide.

The present invention also provides the following.

A method for applying wheat flour flavoring, comprising
shaking out wheat flour flavoring packed in a container from the container and applying the wheat flour flavoring to an object, wherein
the wheat flour flavoring is a powder mixture comprising wheat flour and powdered flavoring, the wheat flour flavoring has an angle of repose of 33 to 54 degrees, and the container is a shaker-type container having one or more shaker holes with a maximum width of 2 to 20 mm,
wherein the wheat flour flavoring further comprises 0.02 to 3% by mass of one or more fluidizers selected from the group consisting of a sucrose fatty acid ester and silicon dioxide.

The present invention also provides the following.

A method for manufacturing packed wheat flour flavoring, comprising:
preparing wheat flour having an angle of repose of 33 to 54 degrees;
preparing wheat flour flavoring having an angle of repose of 33 to 54 degrees by mixing the wheat flour and powdered flavoring, wherein the wheat flour flavoring further comprises 0.02 to 3% by mass of one or more fluidizers selected from the group consisting of a sucrose fatty acid ester and silicon dioxide; and
packing the wheat flour flavoring into a container, wherein
the container is a shaker-type container having one or more shaker holes with a maximum width of 2 to 20 mm.

### Advantageous Effects of Invention

The packed wheat flour flavoring of the present invention makes it possible to shake out a necessary amount of wheat flour flavoring from a container to sprinkle the wheat flour flavoring on a target portion of an object such as a foodstuff. In addition, the packed wheat flour flavoring of the present invention does not easily cause consolidation or aggregation in the container, or the shaker holes are not easily clogged with the wheat flour flavoring. Therefore, a certain amount of wheat flour flavoring can be shaken out with a slight operation without shaking the container repeatedly or strongly. Furthermore, the packed wheat flour flavoring of the present invention does not separate wheat flour and powdered flavoring or the like from each other in the container, and therefore makes it possible to provide a mix in which a wheat flour component and a flavoring component are blended at an appropriate ratio. The packed wheat flour flavoring of the present invention makes various cooking works simpler and more economical.

### Description of Embodiments

The packed wheat flour flavoring of the present invention is packed in a shaker-type container having one or more shaker holes with a specific size and is shaken out through the shaker holes of the container so as to apply the wheat flour to (for example, sprinkled onto or dredged over) an object in a small amount. In the present invention, "shake" is not limited to an operation of giving vibration by directing an opening of a container downward, and also encompasses an operation of directing the opening of the container vertically downward, an operation of tilting the container, and an operation of giving vibration by inverting or inclining the container, for example. Examples of an object to which the packed wheat flour flavoring of the present invention is applied include a foodstuff and a food before or during cooking and a cooking utensil such as a pan, baking sheets, a chopping board, or plates, however are not limited thereto.

Suitably, the packed wheat flour flavoring of the present invention can be used for seasoning, thickening, and coating of a food and a foodstuff, for example. The packed wheat flour flavoring of the present invention can be used as a coating material for a grilled food such as a meuniere or for a fried food such as a deep-fried food or a deep-fried breaded food, as a seasoning material for grilling or stir-frying, or as a thickening material for a liquid food dish such as a soup when a small amount of wheat flour flavoring is applied to a food and a foodstuff.

The packed wheat flour flavoring of the present invention is wheat flour flavoring packed in a container, and comprises a container and wheat flour flavoring packed in the container. Here, the wheat flour flavoring means a powder mixture containing wheat flour and powdered flavoring.

Wheat as a raw material of wheat flour contained in the wheat flour flavoring may be wheat belonging to any type such as hard wheat, soft wheat, medium-hard wheat, hexaploid wheat, or durum wheat, and may be any kind of wheat belonging thereto. Examples of the wheat include hard wheat such as Canadian Western Red Spring (CW), American Dark Northern Spring (DNS) and Hard Red Winter (HRW), or Australian Prime Hard (PH); Japanese hexaploid wheat; medium-hard wheat such as Australian Standard White (ASW); soft wheat such as American Western White (WW); and durum wheat, however are not limited thereto. Any kind or type of the above wheat may be used singly, or two or more different kinds or types thereof may be used in combination. The wheat flour contained in the wheat flour flavoring may be wheat flour obtained by milling the above wheat. Examples of the wheat flour contained in the wheat flour flavoring include hard wheat flour, semi-hard wheat flour, moderate wheat flour, soft wheat flour, durum wheat flour, and mixtures thereof. Soft wheat flour is preferable. The above wheat flour may contain semolina.

The wheat flour contained in the wheat flour flavoring may be granulated wheat flour obtained by granulating the above wheat flour, non-granulated wheat flour which has not been granulated after milling, or a mixture thereof. Alternatively, the wheat flour contained in the wheat flour flavoring may be classified wheat flour obtained by classifying the granulated wheat flour and/or non-granulated wheat flour, unclassified wheat flour, or a mixture thereof. In a case where the wheat flour contained in the wheat flour flavoring is semolina flour or granulated wheat flour, consolidation or aggregation of the wheat flour flavoring due to hygroscopic powdered flavoring can be reduced. Therefore, this case is preferable. Incidentally, in the following description, the term "wheat flour" includes non-granulated wheat flour and granulated wheat flour as well as classified wheat flour and unclassified wheat flour, unless otherwise specifically distinguished.

The powdered flavoring contained in the wheat flour flavoring only needs to be flavoring powder used for cooking. Examples thereof include sugar; salt; powdered source such as powdered soy sauce, powdered *miso* (bean paste), powdered Chinese sauce, or *mirin* powder, stock powder such as amino acid-based *umami* (savoy taste) flavoring or nucleic acid-based *umami* (savoy taste) flavoring; a powdered spice such as pepper, ginger, garlic, cumin, nutmeg, or a curry powder; a powder extract such as a meat extract, a fish and shellfish extract, or a vegetable extract; powdered oil and fat; and mixtures thereof. Furthermore, a flavoring premixed powder, for example, a flavoring mix for flavoring of fish and meat, or for sweet and sour pork, chop suey, or fried rice; a mix for a pasta sauce; or a soup mix for a corn soup, a cream soup, or a Chinese soup can also be used. The type and composition of the powdered flavoring used in the present invention are not particularly limited, and can be appropriately selected according to applications of the wheat flour flavoring.

The powdered flavoring preferably contains powdered oil and fat. The content of the powdered oil and fat in the above wheat flour flavoring is preferably from 1 to 8% by mass, more preferably from 2 to 5% by mass. Inclusion of the powdered oil and fat in the wheat flour flavoring imparts richness to the taste of the wheat flour flavoring. Examples of the powdered oil and fat include those made into powder by impregnating a carrier such as starch, dietary fiber, or casein with edible oil and fat and drying the resulting product, or capsules. However, the type and form of the powdered oil and fat are not particularly limited as long as the powdered oil and fat are obtained by forming edible oil and fat into powder.

A mass ratio between the above wheat flour and the above powdered flavoring in the above wheat flour flavoring (the total mass of the wheat flour and the powdered flavoring is assumed to be 100, the same applies hereinafter) is preferably from 40 : 60 to 85 : 15. When the mass ratio falls without this range, it may be difficult to adjust the angle of repose of the wheat flour flavoring within a range described below, and the wheat flour and the powdered flavoring are easily separated from each other in the wheat flour flavoring. The mass ratio between the wheat flour and the powdered flavoring is more preferably from 55 : 45 to 80 : 20. The mass ratio is still more preferably from 70 : 30 to 80 : 20.

In the present invention, the above wheat flour flavoring may contain powder other than the above wheat flour and the above powdered flavoring according to applications and purposes. Examples of the other powder include cereal flour other than wheat flour, such as rye flour, rice flour, corn flour, barley flour, or bean flour; starch such as tapioca starch, potato starch, corn starch, waxy corn starch, or wheat starch, and a processed starch thereof such as a pregelatinized starch, an etherified starch, an esterified starch, an acetylated starch, or a crosslinked starch; a protein; a saccharide such as dextrin; a thickener; an emulsifier; a swelling agent; activated gluten; and an enzyme. The content of the other powder in the above wheat flour flavoring is preferably less than 20% by mass, more preferably less than 15% by mass.

The total content of the above wheat flour and the above powdered flavoring in the above wheat flour flavoring is preferably 80% by mass or more, more preferably 85% by mass or more, still more preferably 90% by mass or more.

In the present invention, the wheat flour contained in the above wheat flour flavoring has an average particle diameter preferably of 40 to 700 µm, more preferably of 70 to 450 um. The powdered flavoring and the other powder contained in the above wheat flour flavoring preferably has an average particle diameter of 10 to 500 um. Here, the average particle diameter means a mean volume diameter (MV) of a particle diameter calculated by a laser diffraction/scattering method.

The wheat flour flavoring has an angle of repose of 33 to 54 degrees, preferably of 38 to 53 degrees, more preferably of 42 to 52 degrees as the whole powder. If the angle of repose of the wheat flour flavoring is less than 33 degrees, for example, a large amount of wheat flour flavoring is shaken out from a container by a single shaking operation, or wheat flour and powdered flavoring are easily separated from each other in the container. Operability of the packed wheat flour flavoring is reduced. Meanwhile, if the angle of repose of the wheat flour flavoring is more than 54 degrees, the amount of the wheat flour flavoring shaken from the container is too small, and wheat flour flavoring easily causes consolidation or aggregation in the container. Operability of the packed wheat flour flavoring is reduced. Here, the angle of repose of a powder is a value measured according to the following procedures preferably using a powder tester PT-X (manufactured by Hosokawa Micron Corporation): (Method for measuring angle of repose) Using a funnel having an opening diameter of 5 mm with an oscillation width of 0.5 mm, 100 g of a sample powder is deposited on a circular table having a diameter of 8 cm from a position having a height of 7.5 cm. At this time, the powder is deposited to such an extent that the deposited powder overflows from an edge of the table. An angle formed between a conical ridge line of the deposited powder on the table and the circular table surface is measured by laser light, and the measured value is taken as an angle of repose of the powder. Incidentally, for reference, the angle of repose of ordinary wheat flour measured according to the above procedures is about 55 to 56 degrees for both soft wheat flour and hard wheat flour.

Examples of a method for adjusting the angle of repose of the wheat flour flavoring within the above range include a method for adjusting the surface properties and composition of powder components contained therein such that the angle of repose of the whole wheat flour flavoring falls within a desired range. Examples of the method include a method for preparing wheat flour flavoring having an angle of repose within the above range by adjusting a particle diameter or a particle size distribution of wheat flour serving as a raw material for the wheat flour flavoring by, for example, granulation or classification to prepare wheat flour having an angle of repose within the above range, then adding another components such as powdered flavoring to the wheat flour to manufacture a base powder mixture, and then appropriately adding a fluidizer such as a sucrose fatty acid ester or silicon dioxide described below to the powder mixture to adjust the angle of repose. Usually, addition of a fluidizer such as a sucrose fatty acid ester or silicon dioxide acts to lower the angle of repose of the wheat flour flavoring.

Therefore, the wheat flour flavoring further contains a fluidizer. Inclusion of the fluidizer makes it easy to adjust the angle of repose of the wheat flour flavoring within the above range, and makes it possible to reduce separation of wheat flour and powdered flavoring from each other in the wheat flour flavoring. As the fluidizer, one or more selected from the group consisting of a sucrose fatty acid ester and silicon dioxide is used singly or in combination thereof. Any type of edible sucrose fatty acid ester may be used. However, the sucrose fatty acid ester preferably has HLB of 11 or less, for example, preferably has HLB of 3 to 11, more preferably has HLB of 3 to 8. Any type of edible silicon dioxide may be used. The content of the fluidizer in the wheat flour flavoring is from 0.02 to 3% by mass, preferably from 0.05 to 2% by mass, still more preferably from 0.05 to 1% by mass. If the content of the fluidizer is more than 3% by mass, the wheat flour flavoring may exhibit bitterness.

The wheat flour contained in the wheat flour flavoring preferably contains granulated wheat flour or classified wheat flour from a viewpoint of adjusting the angle of repose of the wheat flour flavoring. For example, the wheat flour contained in the wheat flour flavoring is granulated wheat flour, a mixture of granulated wheat flour and non-granulated wheat flour, classified wheat flour, or a mixture of classified wheat flour and unclassified wheat flour. More suitably, 80% by mass or more, preferably 90% by mass or more, more preferably 95% by mass or more, still more preferably 100% by mass, of the wheat flour contained in the wheat flour flavoring is granulated wheat flour or classified wheat flour, and the rest is wheat flour other than the granulated wheat flour and classified wheat flour. Suitably, the whole wheat flour contained in the wheat flour flavoring has an angle of repose of 33 to 54 degrees, preferably of 38 to 53 degrees, more preferably of 42 to 52 degrees.

The granulated wheat flour used in the present invention can be manufactured from wheat flour serving as a raw material of the above wheat flour flavoring by a known means. Furthermore, the granulated wheat flour may contain, in addition to the wheat flour raw material, another powder raw material, for example, a cereal flour other than wheat flour, starch, a saccharide such as dextrin, a swelling agent, or a dye powder. However, a smaller content of the other powder raw material in the granulated wheat flour is more preferable such that the granulated wheat flour can retain original properties of wheat flour and can be easily applied to similar applications to conventional wheat flour. Therefore, the content of the other powder raw material in the granulated wheat flour is preferably less than 40% by mass, more preferably less than 30% by mass of the whole raw material powder including the wheat flour raw material and the other powder raw material. In other words, the content of the wheat flour raw material in the granulated wheat flour is preferably more than 60% by mass, more preferably more than 70% by mass.

The granulated wheat flour can be manufactured by a method for adding water to a raw material flour containing the wheat flour raw material, mixing the mixture, and then drying the mixture; a method for mixing water containing all or a part of the other powder raw material serving as a binder with the remaining other powder raw material and wheat flour raw material, and drying the mixture; or a method for compressing a raw material flour containing the wheat flour raw material as it is and then crushing the compressed product. A method for preparing granulated wheat flour is not particularly limited. However, for example, tumbling granulation, fluidized bed granulation, stirring granulation, and spray drying granulation can be used. Examples of a granulation step include a step of granulating the raw material flour by stirring the raw material flour with a vertical mixer while gradually adding thereto water , and a step of granulating the raw material powder while mixing and transferring at the same time by stirring and transferring the raw material flour with a feeder-type horizontal mixer while adding thereto water during the transfer with a sprayer or the like, however are not limited thereto. Stirring granulation is preferable from a viewpoint of convenience. Each of the above granulation methods can be performed using a commercially available granulation apparatus. Incidentally, after granulation, the granulated wheat flour can also be sized or dried as needed.

Preferable examples of the granulated wheat flour used in the present invention include those disclosed in JP 2015-200207 A, JP 2015-200208 A, and Patent Literature 3.

In the present invention, the wheat flour flavoring is provided in a state of being packed in a shaker-type container having one or more shaker holes. The shaker-type container only needs to have a size and a shape capable of hold the shaker-type container with one hand and performing an operation of shaking out internal wheat flour flavoring. For example, a container having a size and a shape similar to a cruet for seasoning or spice is preferable. More specifically, the shaker-type container is preferably a self-standing container having a cylindrical column shape, an elliptical column shape, a prismatic shape, or a shape obtained by combining these shapes, having a diameter or a side length of 20 to 100 mm and a height of about 80 to 200 mm, and having a size capable of packing about 50 to 500 g of wheat flour flavoring therein. The material of the container is not particularly limited as long as being a material that can store wheat flour flavoring and does not deform during a shaking operation, and examples of the material include plastic, metal, and paper.

The shape of each of one or more shaker holes of the shaker-type container is not particularly limited. However, examples of the shape include a circle, a triangle, a rectangle, and other polygon. The size of each of the one or more shaker holes is such that its maximum width is 2 to 20 mm, preferably 3 to 12 mm, more preferably 4 to 12 mm, still more preferably 4 to 8 mm. The number of the shaker holes is preferably 2 to 9, more preferably 4 to 7. In a case where the size of each of the shaker holes is too small or the number of the holes is small, the shaking amount tends to be too small, or each of the holes is easily clogged with wheat flour flavoring. On the contrary, in a case where the size of each of the shaker holes is too large or the number of the holes is large, a large amount of wheat flour flavoring is shaken out by a single shaking operation, and an excessive amount of the wheat flour flavoring is sprinkled on an object or an excessive amount of the wheat flour flavoring is used, leading to decrease in economy. In addition, the wheat flour flavoring soars or splashes, and easily contaminates surroundings. The shaker-type container used in the present invention preferably has two to nine circular shaker holes with a diameter of 2 to 20 mm, more preferably has four to seven circular shaker holes with a diameter of 3 to 12 mm, still more preferably has four to seven circular shaker holes with a diameter of 4 to 12 mm, and further still more preferably has four to seven circular shaker holes with a diameter of 4 to 8 mm. In addition, the shaker container used in the present invention preferably has two to nine substantially quadrangular or substantially polygonal shaker holes with a diagonal line length of 2 to 20 mm, more preferably has four to seven substantially quadrangular or substantially polygonal shaker holes with a diagonal line length of 3 to 12 mm, still more preferably has four to seven substantially quadrangular or substantially polygonal shaker holes with a diagonal line length of 4 to 12 mm, and further still more preferably has four to seven substantially quadrangular or substantially polygonal shaker holes with a diagonal line length of 4 to 8 mm.

Furthermore, the shaker-type container may have a spooning opening in addition to the one or more shaker holes. The spooning opening can be used as an opening for taking out internal wheat flour flavoring from the container with a measuring spoon, a teaspoon, or the like, or for shaking out a large amount of wheat flour flavoring from the container. In the shaker-type container, the spooning opening is preferably disposed at a position far away from the one or more shaker holes. For example, the shaker holes may be disposed at one end on a top surface of the shaker container, and the spooning opening may be disposed at a point 90 to 180° away from the shaker holes in the top surface.

The one or more shaker holes and the spooning opening of the above shaker-type container are preferably openable and closable. The shaker holes and the spooning opening preferably have an openable and closable lid. The lid can prevent moisture absorption of the wheat flour flavoring packed in the shaker-type container and can prevent foreign matters such as insects from entering the container. The type of the lid is not particularly limited. However, the lid is preferably a lid that can be easily opened and closed with one hand, for example, a sliding lid or a flap lid. In addition, the lid of the shaker holes is preferably one lid capable of opening and closing a plurality of shaker holes at one time. The lid of the one or more shaker holes and the lid of the spooning opening may be common to or different from each other. However, in either case, it is preferred that the lid(s) is (are) configured to avoid simultaneous opening of the one or more shaker holes and the spooning opening. For example, as the lid of the one or more shaker holes and the lid of the spooning opening, two flap lids that can be independently opened and closed are used. Alternatively, as the lid of the one or more shaker holes and the lid of the spooning opening, one common sliding lid that moves such that at least either of the shaker holes or the spooning opening is closed is used.

Preferably, in a case where the packed wheat flour flavoring of the present invention is shaken out from the container by performing once the shaking operation of directing the opening of the container vertically downward, wheat flour flavoring can be shaken out in an amount just enough to flour an ingredient such as meat or fish, for example, about 0.1 g to 2.4 g, preferably of about 0.3 to 1.8 g, more preferably of about 0.6 to 1.4 g. In a case where a larger amount of wheat flour flavoring is shaken out from the container, it is only required to repeat the shaking operation or to perform the shaking operation more strongly.

### Examples

Next, Examples will be described in order to more specifically describe the present invention. However, the present invention is not limited only to the following Examples. In the following Examples, the angle of repose of powder was measured using a powder tester PT-X (manufactured by Hosokawa Micron Corporation), and the average particle diameter refers to mean volume diameter (MV) of a particle diameter calculated by a laser diffraction/scattering method using Microtrac MT3000II (Nikkiso Co., Ltd.).

Production Examples 1-6, 11, 14, 17-35, 40, 42, 43-55 are not according to the invention.

### (Manufacture Examples 1 to 17: packed wheat flour flavoring)

In a container, 1 kg of commercially available wheat flour (soft wheat flour: "Flour" manufactured by Nisshin Flour Milling Inc.; average particle diameter 54 um; angle of repose 56.8 degrees) was put. Water was added thereto with a sprayer under stirring with a hand mixer, and then drying was performed in a thermostatic chamber to manufacture granulated wheat flour having an average particle diameter of about 177 um and an angle of repose of 43.8 degrees. The granulated wheat flour was mixed with raw materials illustrated in Tables 1 and 2 to obtain wheat flour flavoring having an angle of repose as illustrated in Tables 1 and 2. In a cylindrical container having a diameter of 50 mm and a height of 120 mm, 100 g of the wheat flour flavoring was packed. Thereafter, a circular plastic plate having a diameter of 50 mm and a thickness of 0.2 mm and having five shaker holes with a diameter of 5 mm was fitted in the top of the container to manufacture shaker-packed wheat flour flavoring.

### (Evaluation of packed wheat flour flavoring)

Packed wheat flour flavoring of each of Production Examples 1 to 17 was evaluated based on the following Test Examples 1 to 3.

### Test Example 1: Measurement of shaken-out amount

Packed wheat flour flavoring of each of Production Examples 1 to 17 was shaken out on a smooth flat surface placed horizontally. The shaking-out was done by performing an operation of directing an opening of the container vertically downward at a height of 10 cm just above a marker provided at the center of the flat surface toward the marker once. The amount of wheat flour flavoring shaken out was measured and was taken as a shaken-out amount. The shaken-out amount was evaluated by four rating A to D according to the following criteria.
A: 0.6 to 1.4 g
B: 0.3 g or more and less than 0.6 g or more than 1.4 g and 1.8 g or less
C: 0.1 g or more and less than 0.3 g or more than 1.8 g and 2.4 g or less
D: less than 0.1 g or more than 2.4 g

### Test Example 2: Powder separation test

Packed wheat flour flavoring of each of Production Examples 1 to 17 was horizontally fixed to a shaker and shaking was performed at 80 rpm for two minutes. A distribution state of wheat flour and powdered flavoring in the container after completion of shaking was evaluated by four rating A to D below.
A: Wheat flour and powdered flavoring were almost uniformly mixed with each other, and there is little unevenness
B: There is slightly unevenness in the mixing condition of wheat flour and powdered flavoring
C: There is much unevenness in the mixing condition of wheat flour and powdered flavoring
D: Wheat flour and powdered flavoring are separated from each other in layers and are not suitable for shaking-out

### Test Example 3: taste test

Packed wheat flour flavoring of each of Production Examples 1 to 17 was eaten by 10 panelists and evaluated by four rating A to D below.
A: having an appropriate taste
B: having a slightly strong or slightly weak taste
C: having a strong or weak taste
D: having a very strong or very weak taste

Results of Test Examples 1 to 3 are illustrated in Tables 1 and 2. Note that Table 2 illustrates the result of Production Example 5 again. Comparison among Production Examples 1 to 11 indicates that all of the shaken-out amount, the separation test, and the taste test have good results when the angle of repose of wheat flour flavoring is from 33 to 54 degrees, preferably from 38 to 53 degrees, more preferably from 42 to 52 degrees. In addition, comparison between Production Examples 5 and 6 indicates that it is better to contain no starch even when the blending ratios of wheat flour and flavoring are the same. In addition, comparison between Production Examples 12 and 15 indicates that a particularly good taste is obtained when oil and fat are added. In addition, comparison of Production Example 5 with Production Examples 16 and 17 indicates that good results are obtained when a mass ratio between wheat flour and flavoring falls within a range of 40 : 60 to 85 : 15 although their angles of repose are equivalent to each other.

**[Table 1]**

| | Production Example | | | | | | | | | | |
|---|---|---|---|---|---|---|---|---|---|---|---|
| Blending ratio (% by mass) | 1 | 2 | 3 | 4 | 5 | 6 | 7 | 8 | 9 | 10 | 11 |
| Wheat flour (Angle of repose 43.8 degrees) | 31 | 36 | 37 | 63 | 73 | 78 | 73 | 73 | 73 | 73 | 73 |
| Flavoring mix*¹ | 62 | 57 | 56 | 30 | 20 | 22 | 20 | 20 | 20 | 20 | 20 |
| Powdered oil and fat | | | | | | | | | | | |
| Wheat flour : Flavoring | 33:67 | 39:61 | 40:60 | 68:32 | 78:22 | 78:22 | 78:22 | 78:22 | 78:22 | 78:22 | 78:22 |
| Sucrose fatty acid Ester (HLB5) | | | | | | | | | | | |
| Fine silicon dioxide | | | | | | | 0.05 | 0.5 | 1.8 | 2.5 | 3.3 |
| Starch | Balance | Balance | Balance | Balance | Balance | 0 | Balance | Balance | Balance | Balance | Balance |
| Total | 100 | 100 | 100 | 100 | 100 | 100 | 100 | 100 | 100 | 100 | 100 |
| Angle of repose (degree) | 54.6 | 53.9 | 53.0 | 51.9 | 49.5 | 47.5 | 47.4 | 42.0 | 38.0 | 33.0 | 32.0 |
| Shaken-out amount (g) | 0.08 | 0.2 | 0.4 | 0.6 | 1.0 | 1.2 | 1.2 | 1.4 | 1.8 | 2.0 | 2.5 |
| | D | C | B | A | A | A | A | A | B | C | D |
| Separation test | C | C | C | B | B | A | A | B | B | B | D |
| Taste test | D | C | B | B | A | A | A | A | B | B | C |

| | | | | | | | | | | | |
|---|---|---|---|---|---|---|---|---|---|---|---|
| *1: salt, chicken extract, powdered soy sauce, and pepper | | | | | | | | | | | |

**[Table 2]**

| Blending ratio (% by mass) | Production Example | | | | | | |
|---|---|---|---|---|---|---|---|
| | 5 | 12 | 13 | 14 | 15 | 16 | 17 |
| Wheat flour (Angle of repose 43.8 degrees) | 73 | 73 | 73 | 73 | 73 | 35 | 80 |
| Flavoring mix*¹ | 20 | 20 | 20 | 20 | 20 | 58 | 13 |
| Powdered oil and fat | | | | | 4 | | |
| What flour : Flavoring | 78:22 | 78:22 | 78:22 | 78:22 | 78:22 | 38:62 | 86:14 |
| Sucrose fatty acid Ester (HLB5) | | 1 | 3 | 5 | 1 | | |
| Fine silicon dioxide | | | | | | 0.2 | |
| Starch | Balance | Balance | Balance | Balance | Balance | Balance | Balance |
| Total | 100 | 100 | 100 | 100 | 100 | 100 | 100 |
| Angle of repose (degree) | 49.5 | 47.4 | 41.9 | 34.3 | 46.8 | 49.8 | 46.3 |
| Shaken-out amount (g) | 1.0 | 1.2 | 1.4 | 1.8 | 1.2 | 1.0 | 1.2 |
| | A | A | A | B | A | A | A |
| Separation test | B | A | A | B | A | C | C |
| Taste test | A | B | B | B | A | B | A |

| | | | | | | | |
|---|---|---|---|---|---|---|---|
| *1: salt, chicken extract, powdered soy sauce, and pepper | | | | | | | |

### Test example 4: examination of shaker-type container

Wheat flour flavoring packed in a shaker-type container was manufactured in similar procedures to Production Example 5 except that the sizes of the shaker holes of the shaker-type container were changed as illustrated in Table 3 (Production Examples 18 to 30). For each packed wheat flour flavoring, the shaken-out amount was evaluated in similar procedures to Test Example 1. Results thereof are illustrated in Table 3. Note that Table 3 illustrates the result of Production Example 5 again.

**[Table 3]**

| | Production Example | | | | | | | | | | | | | |
|---|---|---|---|---|---|---|---|---|---|---|---|---|---|---|
| | 18 | 19 | 20 | 21 | 22 | 23 | 24 | 25 | 26 | 27 | 5 | 28 | 29 | 30 |
| Angle of repose (degree) | 49.5 | 49.5 | 49.5 | 49.5 | 49.5 | 49.5 | 49.5 | 49.5 | 49.5 | 49.5 | 49.5 | 49.5 | 49.5 | 49.5 |
| Shaker hole diameter (mm) | 1.5 | 2 | 3 | 4 | 12 | 20 | 22 | 5 | 5 | 5 | 5 | 5 | 5 | 5 |
| Number of shaker holes (piece) | 5 | 5 | 5 | 5 | 2 | 1 | 1 | 1 | 2 | 4 | 5 | 7 | 9 | 10 |
| Shaken-out amount (g) | 0.2 | 0.5 | 0.8 | 1.0 | 1.3 | 1.6 | 2.8 | 0.4 | 0.5 | 1.0 | 1.0 | 1.4 | 1.7 | 2.0 |
| | C | B | A | A | A | B | D | B | B | A | A | A | B | C |

### Test example 5

Granulated wheat flour having an angle of repose of 52.8 degrees was manufactured in similar procedures to production Example 1. Raw materials illustrated in Table 4 were mixed therewith to obtain wheat flour flavoring having an angle of repose illustrated in Table 4. Subsequently, the wheat flour flavoring was packed into a container to manufacture wheat flour flavoring packed in a shaker-type container (Production Examples 31 to 42). Measurement of the shaken-out amount of packed wheat flour flavoring, a separation test, and a taste test were performed in similar procedures to Test Examples 1 to 3.

Results thereof are illustrated in Table 4. Comparison with the results illustrated in Tables 1 and 2 indicates that better results are obtained when the wheat flour flavoring has an angle of repose falling within a range of 33 to 54 degrees, preferably 38 to 53 degrees, more preferably 42 to 52 degrees or has a mass ratio between wheat flour and flavoring falling within a range of 40 : 60 to 85 : 15 although the wheat flour flavoring contain wheat flour having different angles of repose.

**[Table 4]**

| Blending ratio (% by mass) | Production Example | | | | | | | | | | | |
|---|---|---|---|---|---|---|---|---|---|---|---|---|
| | 31 | 32 | 33 | 34 | 35 | 36 | 37 | 38 | 39 | 40 | 41 | 42 |
| Wheat flour (Angle of repose 52.8 degrees) | 30 | 33 | 37 | 63 | 73 | 73 | 73 | 73 | 73 | 80 | 80 | 80 |
| Flavoring mix*¹ | 60 | 51 | 51 | 30 | 20 | 20 | 20 | 20 | 20 | 11 | 11 | 7 |
| Powdered oil and fat | | | 4 | | | | | | 4 | 4 | 4 | 4 |
| Wheat flour : Flavoring | 33:67 | 39:61 | 40:60 | 68:32 | 78:22 | 78:22 | 78:22 | 78:22 | 75:25 | 84:16 | 84:16 | 88:12 |
| Sucrose fatty acid Ester (HLB5) | | | | | | 1 | 3 | | 1 | | 1 | |
| Fine silicon dioxide | | | | | | | | 0.05 | | | | |
| Starch | Balance | Balance | Balance | Balance | Balance | Balance | Balance | Balance | Balance | Balance | Balance | Balance |
| Total | 100 | 100 | 100 | 100 | 100 | 100 | 100 | 100 | 100 | 100 | 100 | 100 |
| Angle of repose (degree) | 32.4 | 33.5 | 37.0 | 41.8 | 47.8 | 46.2 | 44.9 | 46.5 | 48.8 | 53.5 | 51.9 | 54.6 |
| Shaken-out amount (g) | 3.2 | 1.9 | 1.7 | 1.7 | 1.1 | 1.3 | 1.4 | 1.4 | 1.2 | 0.5 | 0.9 | 0.05 |
| | D | C | B | B | A | A | A | A | A | B | A | D |
| Separation test | D | C | C | B | B | A | A | A | A | B | B | A |
| Taste test | D | C | B | B | B | B | B | B | A | B | B | D |

| | | | | | | | | | | | | |
|---|---|---|---|---|---|---|---|---|---|---|---|---|
| *1: salt, chicken extract, powdered soy sauce, and pepper | | | | | | | | | | | | |

### Test example 6: examination of shaker-type container

Wheat flour flavoring packed in a shaker-type container was manufactured in similar procedures to Production Example 35 except that the sizes of the shaker holes of the shaker-type container were changed as illustrated in Table 5 (Production Examples 43 to 55). For each packed wheat flour flavoring, the shaken-out amount was evaluated in similar procedures to Test Example 1. Results thereof are illustrated in Table 5. Note that Table 5 indicates the result of Production Example 35 again.

**[Table 5]**

| | Production Example | | | | | | | | | | | | | |
|---|---|---|---|---|---|---|---|---|---|---|---|---|---|---|
| | 43 | 44 | 45 | 46 | 47 | 48 | 49 | 50 | 51 | 52 | 35 | 53 | 54 | 55 |
| Angle of repose (degree) | 47.8 | 47.8 | 47.8 | 47.8 | 47.8 | 47.8 | 47.8 | 47.8 | 47.8 | 47.8 | 47.8 | 47.8 | 47.8 | 47.8 |
| shaker hole diameter (mm) | 1.5 | 2 | 3 | 4 | 12 | 20 | 22 | 5 | 5 | 5 | 5 | 5 | 5 | 5 |
| Number of shaker holes (piece) | 5 | 5 | 5 | 5 | 2 | 1 | 1 | 1 | 2 | 4 | 5 | 7 | 9 | 10 |
| Shaken-out amount (g) | 0.2 | 0.5 | 0.8 | 1.0 | 1.3 | 1.6 | 2.8 | 0.4 | 0.5 | 1.0 | 1.1 | 1.4 | 1.7 | 2.0 |
| | C | B | A | A | A | B | D | B | B | A | A | A | B | C |

## Claims

1. Packed wheat flour flavoring comprising:
a container; and wheat flour flavoring packed in the container, wherein
the wheat flour flavoring is a powder mixture containing wheat flour and powdered flavoring, the wheat flour flavoring has an angle of repose of 33 to 54 degrees, and the container is a shaker-type container having one or more shaker holes with a maximum width of 2 to 20 mm,
wherein the wheat flour flavoring further comprises 0.02 to 3% by mass of one or more fluidizers selected from the group consisting of a sucrose fatty acid ester and silicon dioxide.

2. The packed wheat flour flavoring according to claim 1, wherein a mass ratio between the wheat flour and the powdered flavoring in the wheat flour flavoring is 40 : 60 to 85 : 15.

3. The packed wheat flour flavoring according to claim 1 or 2, wherein the powdered flavoring comprises powdered fat and oil.

4. The packed wheat flour flavoring according to any one of claims 1 to 3, wherein the wheat flour contains granulated wheat flour or classified wheat flour.

5. A method for applying wheat flour flavoring, comprising
shaking out wheat flour flavoring packed in a container from the container and applying the wheat flour flavoring to an object, wherein
the wheat flour flavoring is a powder mixture comprising wheat flour and powdered flavoring, the wheat flour flavoring has an angle of repose of 33 to 54 degrees, and the container is a shaker-type container having one or more shaker holes with a maximum width of 2 to 20 mm,
wherein the wheat flour flavoring further comprises 0.02 to 3% by mass of one or more fluidizers selected from the group consisting of a sucrose fatty acid ester and silicon dioxide.

6. The method according to claim 5, wherein a mass ratio between the wheat flour and the powdered flavoring in the wheat flour flavoring is 40 : 60 to 85 : 15.

7. The method according to claim 5 or 6, wherein the powdered flavoring comprises powdered fat and oil.

8. The method according to any one of claims 5 to 7, wherein the wheat flour comprises granulated wheat flour or classified wheat flour.

9. A method for manufacturing packed wheat flour flavoring, comprising:
preparing wheat flour having an angle of repose of 33 to 54 degrees;
preparing wheat flour flavoring having an angle of repose of 33 to 54 degrees by mixing the wheat flour and powdered flavoring, wherein the wheat flour flavoring further comprises 0.02 to 3% by mass of one or more fluidizers selected from the group consisting of a sucrose fatty acid ester and silicon dioxide; and
packing the wheat flour flavoring into a container, wherein
the container is a shaker-type container having one or more shaker holes with a maximum width of 2 to 20 mm.

10. The method according to claim 9, wherein a mass ratio between the wheat flour and the powdered flavoring in the wheat flour flavoring is 40 : 60 to 85 : 15.

11. The method according to claim 9, wherein the preparing the wheat flour flavoring comprises: mixing the wheat flour and the powdered flavoring to obtain a powder mixture; and adding one or more selected from the group consisting of the sucrose fatty acid ester and silicon dioxide to the powder mixture to prepare wheat flour flavoring having an angle of repose of 33 to 54 degrees.

12. The method according to any one of claims 9 to 11, wherein the powdered flavoring comprises powdered fat and oil and/or wherein the wheat flour comprises granulated wheat flour or classified wheat flour.

## Patentansprüche

1. Abgepackter Weizenmehlaromastoff, umfassend: einen Behälter und ein in dem Behälter verpackter Weizenmehlaromastoff,
wobei der Weizenmehlaromastoff eine Pulvermischung ist, die Weizenmehl und pulverförmigen Aromastoff enthält, wobei der Weizenmehlaromastoff einen Schüttwinkel von 33 bis 54 Grad aufweist und der Behälter ein Streubehälter ist, der eines oder mehrere Streulöcher mit einer maximalen Weite von 2 bis 20 mm aufweist,
wobei der der Weizenmehlaromastoff ferner 0,02 bis 3 Massenprozent eines oder mehrerer Fließmittel umfasst, ausgewählt aus der Gruppe, bestehend aus einem Saccharosefettsäureester und Siliciumdioxid.

2. Der abgepackter Weizenmehlaromastoff nach Anspruch 1, wobei das Massenverhältnis zwischen dem Weizenmehl und dem pulverförmigen Aromastoff in dem Weizenmehlaromastoff 40:60 bis 85:15 beträgt.

3. Der abgepackter Weizenmehlaromastoff nach Anspruch 1 oder 2, wobei der pulverförmige Aromastoff pulverförmiges Fett und Öl umfasst.

4. Der abgepackter Weizenmehlaromastoff nach einem der Ansprüche 1 bis 3, wobei das Weizenmehl granuliertes Weizenmehl oder klassifiziertes Weizenmehl enthält.

5. Verfahren zum Aufbringen von Weizenmehlaromastoff, umfassend
Ausstreuen von in einem Behälter verpacktem Weizenmehlaromastoff aus dem Behälter und Aufbringen des Weizenmehlaromastoffs auf ein Objekt, wobei
der Weizenmehlaromastoff eine Pulvermischung ist, die Weizenmehl und pulverförmigen Aromastoff umfasst, wobei der Weizenmehlaromastoff einen Schüttwinkel von 33 bis 54 Grad aufweist und der Behälter ein Streubehälter ist, der ein oder mehrere Streulöcher mit einer maximalen Weite von 2 bis 20 mm aufweist, wobei der Weizenmehlaromastoff ferner 0,02 bis 3 Massenprozent eines oder mehrerer Fließmittel umfasst, ausgewählt aus der Gruppe, bestehend aus einem Saccharosefettsäureester und Siliciumdioxid.

6. Das Verfahren nach Anspruch 5, wobei das Massenverhältnis zwischen dem Weizenmehl und dem pulverförmigen Aromastoff in dem Weizenmehlaromastoff 40:60 bis 85:15 beträgt.

7. Das Verfahren nach Anspruch 5 oder 6, wobei der pulverförmige Aromastoff pulverförmiges Fett und Öl umfasst.

8. Das Verfahren nach einem der Ansprüche 5 bis 7, wobei das Weizenmehl granuliertes Weizenmehl oder klassifiziertes Weizenmehl umfasst.

9. Verfahren zur Herstellung von abgepacktem Weizenmehlaromastoff, umfassend:
Herstellen von Weizenmehl mit einem Schüttwinkel von 33 bis 54 Grad;
Herstellen eines Weizenmehlaromastoffs mit einem Schüttwinkel von 33 bis 54 Grad durch Mischen des Weizenmehls und des pulverisierten Aromastoffs, wobei der Weizenmehlaromastoff ferner 0,02 bis 3 Massenprozent eines oder mehrerer Fließmittel umfasst, ausgewählt aus der Gruppe, bestehend aus einem Saccharosefettsäureester und Siliciumdioxid, und
Verpacken des Weizenmehlaromastoffs in einen Behälter, wobei der Behälter ein Streubehälter ist, der ein oder mehrere Streulöcher mit einer maximalen Weite von 2 bis 20 mm aufweist.

10. Das Verfahren nach Anspruch 9, wobei das Massenverhältnis zwischen dem Weizenmehl und dem pulverförmigen Aromastoff in dem Weizenmehlaroma 40:60 bis 85:15 beträgt.

11. Das Verfahren nach Anspruch 9, wobei das Herstellen des Weizenmehlaromastoffs folgendes umfasst: Mischen des Weizenmehls und des pulverförmigen Aromastoffs, um eine Pulvermischung zu erhalten und Zugeben eines oder mehrerer ausgewählt aus der Gruppe, bestehend aus dem Saccharosefettsäureester und Siliciumdioxid zu der Pulvermischung, um einen Weizenmehlaromastoff mit einem Schüttwinkel von 33 bis 54 Grad herzustellen.

12. Das Verfahren nach einem der Ansprüche 9 bis 11, wobei der pulverförmige Aromastoff pulverförmiges Fett und Öl umfasst und/oder wobei das Weizenmehl granuliertes Weizenmehl oder klassifiziertes Weizenmehl umfasst.

## Revendications

1. Aromatisant de farine de blé conditionné comprenant :
un récipient ; et un aromatisant de farine de blé conditionné dans le récipient, dans lequel
l'aromatisant de farine de blé est un mélange poudreux contenant de la farine de blé et un aromatisant en poudre, l'aromatisant de farine de blé a un angle de talus naturel de 33 à 54 degrés, et le récipient est un récipient de type saupoudreuse ayant un ou plusieurs trous de saupoudreuse d'une largeur maximale de 2 à 20 mm,
dans lequel l'aromatisant de farine de blé comprend en outre 0,02 à 3 % en masse d'un ou plusieurs agents de fluidisation sélectionnés parmi le groupe constitué d'un ester d'acide gras de saccharose et du dioxyde de silicium.

2. Aromatisant de farine de blé conditionné selon la revendication 1, dans lequel un rapport massique entre la farine de blé et l'aromatisant en poudre dans l'aromatisant de farine de blé est de 40 : 60 à 85 : 15.

3. Aromatisant de farine de blé conditionné selon la revendication 1 ou 2, dans lequel l'aromatisant en poudre comprend de la graisse et de l'huile en poudre.

4. Aromatisant de farine de blé conditionné selon l'une des revendications 1 à 3, dans lequel la farine de blé contient de la farine de blé granulée ou de la farine de blé classée.

5. Procédé pour appliquer un aromatisant de farine de blé, comprenant de saupoudrer l'aromatisant de farine de blé conditionné dans un récipient depuis le récipient et d'appliquer l'aromatisant de farine de blé sur un objet, dans lequel
l'aromatisant de farine de blé est un mélange poudreux comprenant de la farine de blé et un aromatisant en poudre, l'aromatisant de farine de blé a un angle de talus naturel de 33 à 54 degrés, et le récipient est un récipient de type saupoudreuse ayant un ou plusieurs trous de saupoudreuse d'une largeur maximale de 2 à 20 mm,
dans lequel l'aromatisant de farine de blé comprend en outre 0,02 à 3 % en masse d'un ou plusieurs agents de fluidisation sélectionnés parmi le groupe constitué d'un ester d'acide gras de saccharose et du dioxyde de silicium.

6. Procédé selon la revendication 5, dans lequel un rapport massique entre la farine de blé et l'aromatisant en poudre dans l'aromatisant de farine de blé est de 40 : 60 à 85 : 15.

7. Procédé selon la revendication 5 ou 6, dans lequel l'aromatisant en poudre comprend de la graisse et de l'huile en poudre.

8. Procédé selon l'une des revendications 5 à 7, dans lequel la farine de blé comprend de la farine de blé granulée ou de la farine de blé classée.

9. Procédé de fabrication d'aromatisant de farine de blé conditionné, comprenant :
préparer une farine de blé ayant un angle de talus naturel de 33 à 54 degrés ;
préparer un aromatisant de farine de blé ayant un angle de talus naturel de 33 à 54 degrés en mélangeant la farine de blé et un aromatisant en poudre, dans lequel l'aromatisant de farine de blé comprend en outre 0,02 à 3 % en masse d'un ou plusieurs agents de fluidisation sélectionnés parmi le groupe constitué d'un ester d'acide gras de saccharose et du dioxyde de silicium ; et
conditionner l'aromatisant de farine de blé dans un récipient, dans lequel
le récipient est un récipient de type saupoudreuse ayant un ou plusieurs trous de saupoudreuse d'une largeur maximale de 2 à 20 mm.

10. Procédé selon la revendication 9, dans lequel un rapport massique entre la farine de blé et l'aromatisant en poudre dans l'aromatisant de farine de blé est de 40 : 60 à 85 : 15.

11. Procédé selon la revendication 9, dans lequel préparer l'aromatisant de farine de blé comprend : mélanger la farine de blé et l'aromatisant en poudre pour obtenir un mélange poudreux ; et ajouter un ou plusieurs éléments sélectionnés parmi le groupe constitué de l'ester d'acide gras de saccharose et du dioxyde de silicium au mélange poudreux pour préparer un aromatisant de farine de blé ayant un angle de talus naturel de 33 à 54 degrés.

12. Procédé selon l'une des revendications 9 à 11, dans lequel l'aromatisant en poudre comprend de la graisse et de l'huile en poudre et/ou dans lequel la farine de blé comprend de la farine de blé granulée ou de la farine de blé classée.
